# EUROPÄISCHE PATENTSCHRIFT

(11) **EP 1 077 121 B1**
(45) Veröffentlichungstag und Bekanntmachung des Hinweises auf die Patenterteilung: **12.04.2006**
(21) Anmeldenummer: 00110412.4
(22) Anmeldetag: 16.05.2000
(51) Int. Cl.: B27G 13/12

(54) **Fräswerkzeug**
Milling cutter
Fraise

(30) Priorität: 14.08.1999 DE 29914278 U
(43) Veröffentlichungstag der Anmeldung: 21.02.2001
(73) Patentinhaber: Leitz GmbH & Co. KG, 73447 Oberkochen (DE)
(72) Erfinder: Kisselbach, Andreas, Dipl.-Ing., 73431 Aalen (DE)
(74) Vertreter: Rehmann, Thorsten

(56) Entgegenhaltungen:
- EP-A- 0 816 030
- DE-A- 4 419 026
- DE-U- 29 906 758
- US-A- 4 984 614

## Beschreibung

Die Erfindung betrifft ein Fräswerkzeug für die spanende Bearbeitung von Holz, Holzwerkstoffen oder Kunststoff, insbesondere Umfangsfräser oder Profilfräser, mit an seinem Umfang gleichmäßig versetzt angeordneten Schneiden und mit jeweils einem - in Umlaufrichtung gesehen - vor jeder Schneide angeordneten Spanraum zur Aufnahme und Ableitung der von der nacheilenden Schneide abgeschnittenen Späne, bei dem jede Schneide zumindest einen mit der Werkzeugachse einen spitzen Schneidenlinienwinkel einschließenden Schrägabschnitt aufweist, und dass der Spanraumgrund zumindest bereichsweise eine gegenüber diesem Schrägabschnitt entgegengerichtete Neigung aufweist, die mit dem Schneiden-Schrägschnitt einen spitzen Bodenwinkel einschließt, der größer ist als der genannte Schneidenlinienwinkel.

Bekannte Fräswerkzeuge weisen eine durch Spanfläche, Schneidkante und Freifläche geometrisch definierte Schneide auf. Nach dem Trennvorgang am zu bearbeitenden Werkstück gleitet der entstandene Span entlang der Spanfläche in Richtung auf das Werkzeugzentrum und wird vom Spanraum aufgenommen. Dabei erfolgt die Gleitbewegung im Wesentlichen senkrecht zur Schneidkante. Beim Austritt der Schneiden und des Spanraumes aus der Verdeckung durch das Werkstück erfolgt ein im Wesentlichen tangentiales Auswerfen der Späne aus dem Werkzeug und zwar bei achsparallelen Schneiden in Richtung der Werkzeugnormalebene und bei geneigten Schneiden unter einem Winkel seitlich aus der Werkzeugnormalebene heraus. Bei tangentialem Auswurf bleiben Späne teilweise auf dem Werkstück liegen und stören bei der Weiterverarbeitung im Durchlauf z. B. bei Doppelendenprofilern und Kantenanleimmaschinen dadurch, dass sie unter die Transportrollen oder aber in die Beleimung und Kantenmaterialanpressung geraten.

In der US 4,984,614 wird ein aus einem Fräskopf und darin befestigten Sägeblatt bestehendes, kombiniertes Werkzeug offenbart, dessen Fräskopf die gattungsgemäßen Merkmale offenbart. Durch einen geneigten Spanraumgrund in Umlaufrichtung vor einer Schneide des Fräskopfes werden durch das Sägeblatt erzeugte Sägespäne und durch die Fräserschneide erzeugte Frässpäne von Ihrem Ursprung fortgeleitet, um das Werkzeugsystem nicht zu verstopfen.

Der Erfindung liegt die Aufgabe zugrunde, das eingangs beschriebene Fräswerkzeug dahingehend zu verbessern, dass einerseits die durch eine etwaige Schneidenneigung oder eine bestimmte Profilform erzeugte natürliche Späneflugrichtung nicht behindert, andererseits aber ein Späneauswurf auf das Werkstück vermieden wird.

Diese Aufgabe wird erfindungsgemäß durch die Merkmale des Anspruchs 1 gelöst.

Die erfindungsgemäße Spanraumgestaltung unterstützt die Spanflugrichtung durch Umlenkung derart, dass ein Späneauswurf quer zur Werkzeugnormalebene zu der dem Werkstück abgekehrten Seite erfolgt.

Dabei kann der Spannraumgrund über die axiale Werkzeugbreite geradlinig oder aber kurvenlinienförmig verlaufen mit einer zur tieferen Spanraumseite hin abnehmenden Neigung.

Ferner ist es zweckmäßig, wenn der Durchmesser des radial höchsten Spanraumgrundes gleich dem oder nur etwas kleiner ist als der Durchmesser der in dieser Werkzeug-Stirnseite ausmündenden Schneide.

Ein einseitig geschlossener Spanraum ist auf einfache Weise realisierbar, wenn auf der den größten Durchmesser des Spanraumgrundes aufweisenden Werkzeug-Stirnseite eine mit dem Werkzeug verbundene Scheibe vorgesehen ist, die den Spanraum axial abdeckt.

Der Schneidenlinienwinkel kann sehr klein sein und gegen Null laufen. Im Ausnahmefall kann er auch gleich Null sein. Um eine sichere Spanabfuhr zu gewährleisten muss in diesem Fall der schräge Verlauf im Spanraumgrund entsprechend vergrößert werden.

In der Zeichnung sind einige als Beispiele dienende Ausführungsformen der Erfindung schematisch dargestellt. Es zeigt:
- Figuren 1 bis 4 -: ein als Abrundwerkzeug vorgesehenes Fräswerkzeug mit einseitig geschlossenem Spanraum in verschiedenen Ansichten;
- Figur 5 -: die obere Hälfte eines Profilfräsers mit anliegendem Werkstück;
- Figuren 6 bis 9 -: vier unterschiedliche Fräserformen in einer Darstellung gemäß Figur 5;
- Figuren 10 bis 13 -: ein als Fasewerkzeug verwendbares Fräswerkzeug mit einseitig geschlossenem Spanraum in verschiedenen Ansichten.

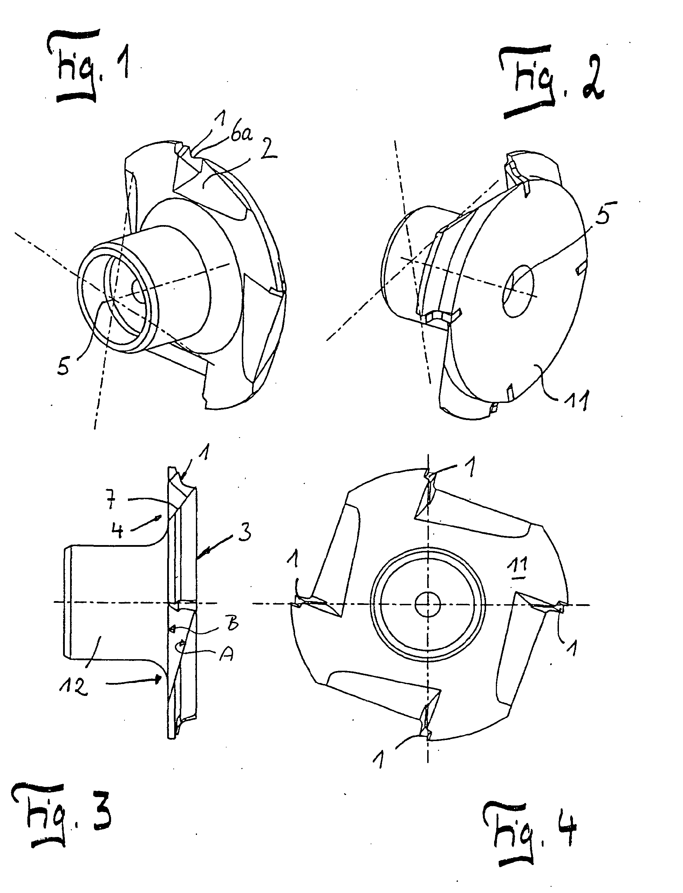

Alle in den Figuren dargestellten Fräswerkzeuge weisen an ihrem Umfang gleichmäßig versetzt angeordnete Schneiden 1 und jeweils einen - in Umlaufrichtung gesehen - vor jeder Schneide 1 angeordneten Spanraum 2 auf, der zur Aufnahme und Ableitung der von der nacheilenden Schneide 1 abgeschnittenen Späne dient. Der Werkzeugkörper 11, in dem die Spanräume 2 ausgebildet sind, geht in axialer Richtung in einen Flansch 12 über, mittels dem das Fräswerkzeug mit einer hier nicht näher dargestellten Antriebswelle verbindbar ist. Hierzu ist der Flansch 12 hohl ausgebildet (vgl. Figuren 1 und 10).

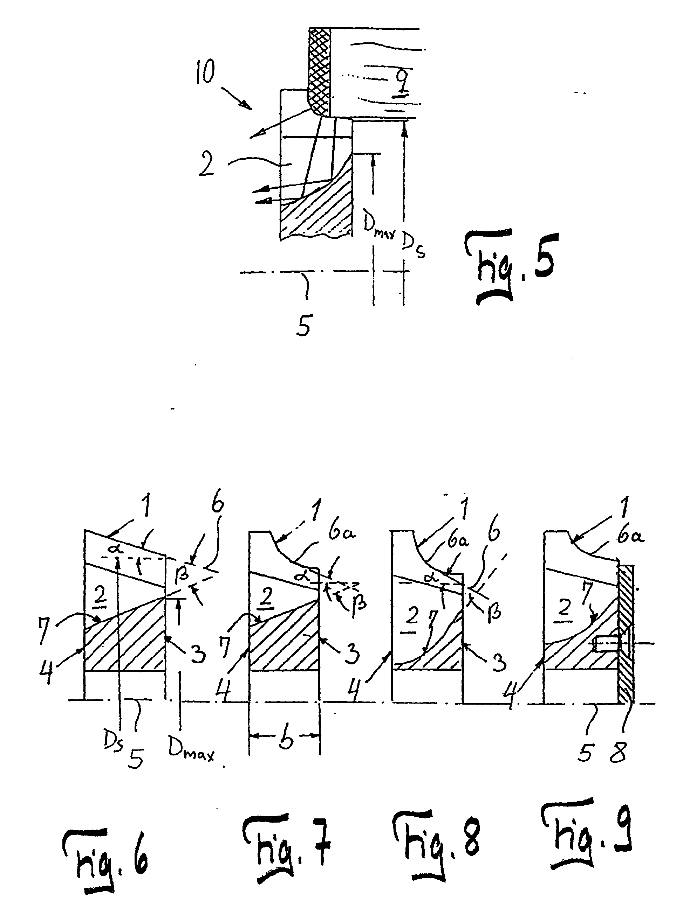

Bei dem Abrundwerkzeug nach Figuren 1 bis 4 und dem Fasewerkzeug nach Figuren 10 bis 13 ist der Spanraum 2 in Richtung der Werkzeugachse 5 betrachtet einseitig geschlossen, indem der Werkzeugkörper 11 an seiner Stirnseite 3 bis an die Schneide 1 herangeführt ist. Die Begrenzung des Spanraumes 2 durch die Ausgestaltung der Stirnseite 3 des Werkzeugkörpers 11 verläuft nicht in einer Ebene, sondern verjüngt den Spanraum 2 in Drehrichtung (vgl. Figuren 1 und 10).

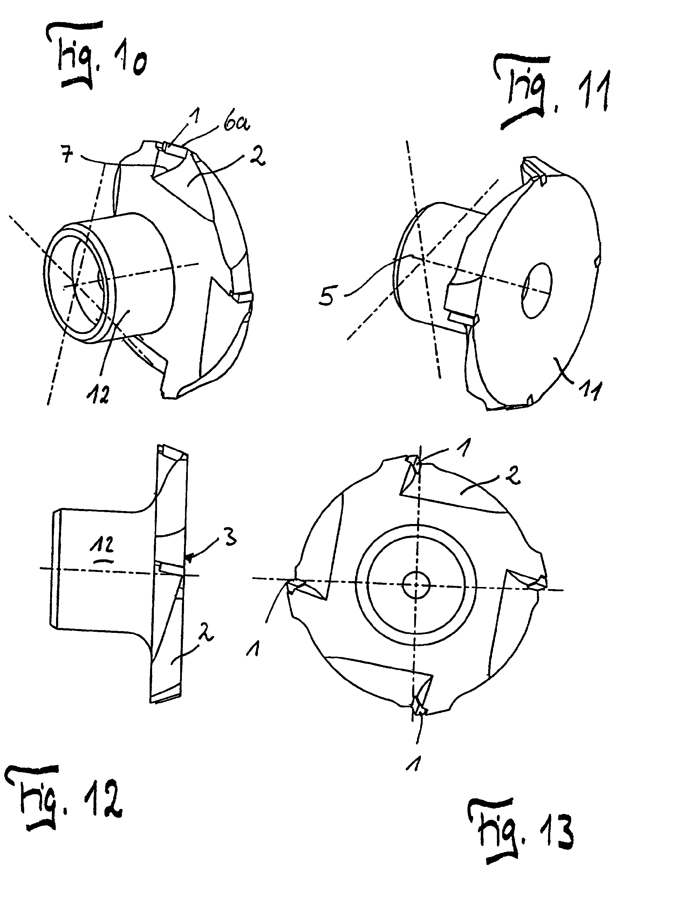

Bei dem in den Figuren 5 bis 9 gezeigten Ausführungsbeispielen erstreckt sich der Spanraum jeweils über die axiale Breite b des Werkzeugs und mündet in dessen beiden Stirnseiten 3, 4 offen aus.

Bei der Ausführungsform gemäß Figur 6 und 10 bis 13 weist die Schneide 1 eine mit der Werkzeugachse 5 einen spitzen Schneidenlinienwinkel α einschließende Schneidenlinie 6 auf. Der Spanraumgrund 7 weist eine gegenüber dieser schrägen Schneidenlinie 6 entgegengerichtete Neigung auf, die mit der Schneidenlinie 6 einen spitzen Bodenwinkel β einschließt, der größer ist als der genannte Schneidenlinienwinkel α. Dabei verläuft der Spanraumgrund 7 über die axiale Werkzeugbreite b geradlinig. Die schematische Darstellung in Figur 6 läßt erkennen, daß die radiale Tiefe des Spanraumes 2 - bezogen auf die Schneide 1 - von einem Minimalwert auf der in Figur 2 rechten Stirnseite 3 auf einen Maximalwert auf der linken Stirnseite 4 zunimmt.

Figur 7 zeigt in einer Darstellung gemäß Figur 6 einen Profilfräser, dessen kurvenförmig ausgebildete Schneide 1 einen Schrägabschnitt 6a aufweist, während die Ausbildung des Spanraumes 2 der der Figur 2 entspricht.

Figur 8 zeigt ebenfalls einen Profilfräser, bei dem der Spanraumgrund 7 über die axiale Werkzeugbreite b kurvenlinienförmig verläuft, wobei der Spanraumgrund 7 zumindest bereichsweise eine gegenüber dem Schrägabschnitt 6a der Schneide 1 entgegengerichtete Neigung aufweist, die mit dem Schneiden-Schrägabschnitt 6a einen spitzen Bodenwinkel β einschließt, der größer ist als der Schneidenlinienwinkel α. Der Schneidenlinienwinkel α kann sehr klein ausgebildet sein und gegen Null tendieren. Im Ausnahmefall kann er Null betragen, wenn eine nicht profilierte Schneide verwendet wird.

Die Ausführungsform der Figur 9 entspricht hinsichtlich der Schneide 1 und des Spanraumgrundes 7 im wesentlichen der der Figur 8, wobei jedoch der über die axiale Werkzeugbreite b kurvenlinienförmig verlaufende Spanraumgrund 7 eine zur tieferen Spanraumseite hin (linke Stirnseite 4) abnehmende Neigung aufweist. Zusätzlich ist jedoch bei dieser Ausführungsform der Spanraum 2 auf der den größten Durchmesser Dₘₐₓ des Spanraumgrundes 7 aufweisenden Werkzeug-Stirnseite 3 durch eine mit dem Werkzeug verbundene, vorzugsweise verschraubte Scheibe 8 abgedeckt, so dass die mit den Ausführungsbeispielen nach den Figuren 1 bis 4 und 10 bis 13 verbundenen Vorteile erhalten werden können. Die Späneerfassung erfolgt außerhalb der Werkzeugrotationsebene. Die (hier nicht dargestellte) Späneerfassungseinrichtung kann axial versetzt zum Werkzeug angeordnet werden und die Schneiden 1 können ungehindert auf den gesamten Werkzeugumfang mit dem Werkstück in Eingriff gelangen. Der austretende Spänestrahl kann allseitig von einem Erfassungselement (nicht gezeigt) umschlossen werden. Dadurch können die Späne vollständig erfasst werden. Wenn die beim Arbeiten entstehenden Späne abgesaugt werden sollen, kann die Absaugöffnung des Späneerfassungselements exakt in Richtung des austretenden Spänestrahls angeordnet werden. Weil die Späne nicht mehr durch die Absaugluft umgelenkt werden müssen, kann mit einer vergleichsweise geringen Absaugleistung gearbeitet werden. Der Späneaustritt erfolgt bei dieser Ausgestaltung also nicht umfangsseitig in der Rotationsebene der Schneiden 1, sondern entlang einer axial ausgerichteten Kegelfläche zwischen Rotationsebene und Werkzeugachse 5, was durch die zu einer Stirnseite 3 hin axial geschlossenen und zu der anderen Stirnseite 4 hin weit geöffneten Spanräume 2 begünstigt wird.

Alle Ausführungsbeispiele lassen erkennen, daß der Durchmesser Dₘₐₓ des radial höchsten Spanraumgrundes 7 nur etwas kleiner ist als der Durchmesser D_{S} der in dieser Werkzeug-Stirnseite 3 ausmündenden Schneide 1.

Figur 5 verdeutlicht die spanende Bearbeitung eines Werkstückes 9 durch einen Profilfräser 10, wobei die eingezeichneten Pfeile die Ableitung der von der nacheilenden Schneide abgeschnittenen Späne andeuten.

### Bezugszeichenliste

- 1: Schneide
- 2: Spanraum
- 3: Stirnseite
- 4: Stirnseite
- 5: Werkzeugachse
- 6: Schneidenlinie
- 6a: Schrägabschnitt
- 7: Spanraumgrund
- 8: Scheibe
- 9: Werkstück
- 10: Profilfräser
- 11: Werkzeugkörper
- 12: Flansch

## Patentansprüche

1. Fräswerkzeug für die spanende Bearbeitung von Holz, Holzwerkstoffen oder Kunststoff, insbesondere Umfangsfräser oder Profilfräser, mit an seinem Umfang gleichmäßig versetzt angeordneten Schneiden (1) und mit jeweils einem - in Umlaufrichtung gesehen - vor jeder Schneide (1) angeordneten Spanraum (2) zur Aufnahme und Ableitung der von der nacheilenden Schneide (1) abgeschnittenen Späne, bei dem jede Schneide (1) zumindest einen mit der Werkzeugachse (5) einen spitzen Schneidenlinienwinkel (α) einschließenden Schrägabschnitt (6a) aufweist und der Spanraumgrund (7) zumindest bereichsweise eine gegenüber diesem Schrägabschnitt (6a) entgegengerichtete Neigung aufweist, die mit dem Schneiden-Schrägabschnitt (6a) einen spitzen Bodenwinkel (β)einschließt, der größer ist als der genannte Schneidenlinienwinkel (α), **dadurch gekennzeichnet, dass** sich der Spanraumgrund (7) in Drehrichtung verjüngt.

2. Fräswerkzeug nach Anspruch 1, **dadurch gekennzeichnet, dass** der Spanraum (2) an einer seiner Stirnseiten (3) geschlossen ist.

3. Fräswerkzeug nach Anspruch 1, **dadurch gekennzeichnet, dass** der Spanraumgrund (7-Figur 6) uber die axiale Werkzeugbreite (b) geradlinig verläuft.

4. Fräswerkzeug nach einem der Ansprüche 1 bis 3, **dadurch gekennzeichnet, dass** der Spanraumgrund (7-Figur 9) uber die axiale Werkzeugbreite (b) kurvenlinienförmig verläuft mit einer zur tieferen Spanraumseite hin abnehmenden Neigung.

5. Fräswerkzeug nach einem der Ansprüche 3 bis 4, **dadurch gekennzeichnet, dass** der Durchmesser (Dₘₐₓ) des radial höchsten Spanraumgrundes (7) gleich dem oder nur etwas kleiner ist als der Durchmesser (D_{S}) der in dieser Werkzeug-Stirnseite (3) ausmündenden Schneide (1).

6. Fräswerkzeug nach Anspruch 2, **dadurch gekennzeichnet, dass** der Spanraum (2) auf der den größten Durchmesser (Dₘₐₓ) des Spanraumgrundes (7) aufweisenden Werkzeug-Stirnseite (3) durch eine mit dem Werkzeug verbundene Scheibe (8) abgedeckt ist.

7. Fräswerkzeug nach Anspruch 1, **dadurch gekennzeichnet, dass** der Schneidenlinienwinkel (α) gegen Null läuft oder gleich Null ist.

## Claims

1. Router cutter for machining wood, wooden materials or plastic, in particular peripheral cutters or profile cutters, having cutting edges (1) arranged in a uniformly offset manner on its periphery, and having a respective chip space (2) arranged in front of each cutting edge (1) (as viewed in the peripheral direction) and intended for receiving and discharging the chips cut off by the trailing cutting edge (1), in which milling cutter each cutting edge (1) has at least one sloping section (6a) enclosing an acute edge-line angle (α) with the tool axis (5), and at least a region of the chip-space root (7) has an inclination which is opposed to this sloping section (6a) and which encloses an acute base angle (β) with the cutting edge sloping section (6a), this base angle (β) being greater than the said edge-line angle (α), **characterized in that** the chip-space root (7) tapers in the direction of rotation.

2. Router cutter according to Claim 1, **characterized in that** the chip space (2) is closed at one of its end faces (3).

3. Router cutter according to Claim 1, **characterized in that** the chip-space root (7 - Figure 6) runs rectilinearly over the axial tool width (b).

4. Router cutter according to one of Claims 1 to 3, **characterized in that** the chip-space root (7 - Figure 9) runs in a curved shape over the axial tool width (b) with an inclination decreasing towards the deeper chip-space side.

5. Router cutter according to either of Claims 3 and 4, **characterized in that** the diameter (Dₘₐₓ) of the radially highest chip-space root (7) is equal to or is only slightly smaller than the diameter (D_{S}) of the cutting edge (1) leading out in this tool end face (3).

6. Router cutter according to Claim 2, **characterized in that** the chip space (2), on the tool end face (3) having the largest diameter (Dₘₐₓ) of the chip-space root (7), is covered by a disc (8) connected to the tool.

7. Router cutter according to Claim 1, **characterized in that** the edge-line angle (a) runs towards zero or is equal to zero.

## Revendications

1. Outil de fraisage pour le travail avec formation de copeaux, du bois, matières en bois ou produit synthétique, en particulier une fraise de pourtour ou fraise de profil, comprenant sur son pourtour des tranchants (1) régulièrement espacés et ayant chacun - vu dans la direction du pourtour - une chambre à copeaux (2) disposée devant chaque tranchant (1) pour la réception et l'évacuation des copeaux découpés par les tranchants disposés en retard de phase, dans lequel chaque tranchant (1) présente au moins une section inclinée (6a) inscrite dans une ligne de tranchant formant un angle aigu (α) avec l'axe (5) de l'outil, et le fond (7) de la chambre à copeaux présente au moins dans une région une inclinaison en sens inverse de la section inclinée qui forme un angle de fond aigu (β) avec la section inclinée du tranchant (6a) qui est plus grand que ledit angle (α) de la ligne du tranchant, **caractérisé en ce que** le fond (7) de la chambre à copeaux s'amincit dans la direction de rotation.

2. Outil de fraisage selon la revendication 1, **caractérisé en ce que** la chambre à copeaux (2) est fermée à l'un de ses côtés frontaux (3).

3. Outil de fraisage selon la revendication 1, **caractérisé en ce que** le fond de la chambre à copeaux (7 - Figure 6) s'étend de façon rectiligne suivant la largeur axiale (b) de l'outil.

4. Outil de fraisage selon l'une des revendications 1 à 3, **caractérisé en ce que** le fond de la chambre à copeaux (7 - Figure 9) s'étend de façon curviligne suivant la largeur axiale (b) de l'outil avec une inclinaison qui diminue vers le côté le plus bas de la chambre à copeaux.

5. Outil de fraisage selon l'une des revendications 3 à 4, **caractérisé en ce que** le diamètre (Dmax) du fond de la chambre à copeaux (7) le plus élevé dans la direction radiale est égal ou légèrement inférieur au diamètre (Ds) du tranchant (1) qui débouche dans ce côté frontal (3) de l'outil.

6. Outil de fraisage selon la revendication 2, **caractérisé en ce que** la chambre à copeaux (2) sur laquelle le diamètre le plus grand du côté frontal (3) de l'outil adjacent au fond de la chambre à copeaux (7) est recouvert avec une plaque (8) liée à l'outil.

7. Outil de fraisage selon la revendication 1, **caractérisé en ce que** l'angle (α) de la ligne du tranchant est proche de zéro ou est égal à zéro.
